# EUROPEAN PATENT SPECIFICATION

(11) **EP 4 480 764 B1**
(45) Date of publication and mention of the grant of the patent: **19.08.2026**
(21) Application number: 23200837.5
(22) Date of filing: 29.09.2023
(51) Int. Cl.: B60T 1/06

(54) **BRAKE DUST COLLECTOR**
BREMSSTAUBSAMMLER
COLLECTEUR DE POUSSIÈRE DE FREIN

(30) Priority: 22.06.2023 KR 20230080516
(43) Date of publication of application: 25.12.2024
(73) Proprietor: HL Mando Corporation, Pyeongtaek-si, Gyeonggi-do 17962 (KR)
(72) Inventor: AHN, Dongkyun, 06517 Seoul (KR)
(74) Representative: BCKIP Part mbB

(56) References cited:
- WO-A1-2021/083629
- DE-A1- 102020 125 273
- KR-A- 20200 111 844
- US-A1- 2021 246 953
- US-A1- 2022 397 168
- US-A1- 2023 003 269
- US-B2- 11 248 669

## Description

### TECHNICAL FIELD

The present invention relates to an assembly for collecting brake dust, and more particularly, to an assembly for collecting brake dust capable of effectively collecting dust generated by friction between brake pads and a disc.

### BACKGROUND

As the importance of environmental protection is emphasized, eco-friendliness is emerging as a major issue for the automobile industry, and regulations on pollutants emitted from vehicles are also being continuously reinforced.

Meanwhile, pollutants discharged from vehicles are largely classified into pollutants discharged from exhaust systems and pollutants discharged from non-exhaust systems. Pollutants discharged from exhaust systems are contained in the exhaust gas, etc. generated while the engines of the vehicles are driven, and such pollutants have already been regulated. In the future, regulations on pollutants discharged from non-exhaust systems are expected.

In particular, among pollutants discharged from non-exhaust systems, dust generated due to wear caused by the friction between the brake pads and the disc when vehicles are braked contains a large amount of harmful substances. For this reason, regulations on harmful dust or fine dust are gradually being reinforced, and accordingly, a method for minimizing such harmful dust or fine dust is needed.

Also, caliper brakes generally provide a relatively stable braking force even at high speed repetitions, and vehicles to which the caliper brakes are applied are relatively high-performance vehicles that generate a large amount of dust between the disc and the brake pads. Accordingly, a method for reducing dust is more urgently required.

Meanwhile, an existing brake dust collector for solving the problem collects dust by the flow of fluid flowing into a housing in which a filter is installed by driving of the vehicle and a rotation of the disc. Therefore, backflow often occurs according to the flow velocity and flow rate of the fluid flowing into the housing, which lowers the efficiency of collecting dust.

Also, the existing brake dust collector applies a filter occupying a relatively large area along the inner circumferential surface of the housing. Accordingly, there are problems that the manufacturing cost increases due to the relatively high cost of the filter and the maintenance cost increases due to filter replacement, filter damage, etc.

US 11 248 669 B2 discloses an arrangement comprising a disc, a brake caliper for braking the disc, and a brake dust collector for collecting brake dust generated during braking of the disc. The brake dust collector includes a housing partially surrounding the disc and the brake caliper, and a plurality of guide pins protruding from a circumferential wall of the housing.

WO 2021/083629 A1 discloses a brake dust particle filter for a disc brake assembly with a brake disc and a brake caliper. The brake dust particle filter is configured to collect particles resulting from braking. The brake dust filter comprises a housing including a first and a second side wall which are arranged opposite to each other and a peripheral wall connecting the first and the second side wall. The first side wall comprises at least one guiding element protruding towards the second side wall within the housing. The brake dust particle filter is configured to accommodate the brake disc between a distal edge of the guiding element and the second side wall.

### SUMMARY OF THE INVENTION

It is an object of the invention to provide a brake dust collector capable of effectively reducing brake dust that is generated by friction between a disc and brake pads and discharged to outside of a housing.

It is another object of the invention to provide a brake duct collector capable of improving efficiency of collecting brake dust through a brake dust guide structure and a backflow prevention structure.

It is another object of the invention to provide a brake duct collector capable of significantly reducing a size of a filter for collecting brake dust.

Additional advantages of the invention will be set forth in part in the description which follows and, in part, will be obvious from the description, or may be learned by practice of the invention.

To this end, the present invention provides an assembly for collecting brake dust in accordance with claim 1.

In accordance with the invention, a brake dust collector for collecting brake dust generated from a caliper brake that generates a braking force by a pair of brake pads respectively positioned to both sides of a disc rotating together with a wheel and configured to be tightly pressed against the disc or spaced from the disc, includes: a housing surrounding at least one portion of the disc and the caliper brake, wherein the brake pads are positioned inside the housing; and a plurality of guide pins protruding from an inner side wall of the housing in an axial direction of the disc and extending from an area where the brake dust is discharged toward an inner circumferential surface of the housing.

The guide pins are provided at a leading portion and/or at a trailing portion of the housing.

The guide pins may be integrated into the housing or detachable from the housing in the axial direction of the disc.

The guide pins may include a guide pin flange supported on an outer side wall of the housing and configured to fix the guide pins to the housing.

The guide pins may include a backflow prevention pin configured to prevent a backflow of fluid, generated by an inner wall of the housing.

The housing may include an inner housing and an outer housing configured to be detachable from the inner housing.

The inner housing may include an inner guide pin coupling portion penetrating the inner housing in the axial direction of the disc, and the guide pins may include an inner guide pin integrated into the inner housing or configured to be detachable from the inner guide pin coupling portion.

The outer housing may include an outer guide pin coupling portion penetrating the outer housing in the axial direction of the disc, and the guide pins may include an outer guide pin integrated into the outer housing or configured to be detachable from the outer guide pin coupling portion.

In accordance with the invention, the assembly for collecting brake dust includes: a caliper brake including a pair of brake pads respectively positioned to both sides of a disc rotating together with a wheel and configured to be tightly pressed against the disc or spaced from the disc while a piston moves forward and backward; a housing surrounding at least one portion of the disc and the caliper brake, wherein the brake pads are positioned inside the housing; a filter assembly provided inside the housing; and a plurality of guide pins protruding from an inner side wall of the housing in an axial direction of the disc and extending from an area where brake dust generated by friction between the brake pads and the disc is discharged toward the filter assembly.

The filter assembly may be detachable from an inner circumferential surface of the housing.

The filter assembly may include: a case provided at an inner end of the housing and being in a shape of a cup; and a filter provided in an inside space of the case, and the filter assembly may be detachable from the housing.

The guide pins may be integrated into the housing or detachable from the housing in the axial direction of the disc.

The guide pins may include a guide pin flange supported on an outer side wall of the housing and configured to fix the guide pins to the housing.

A plurality of guide pins may be arranged at preset intervals on the guide pin flange.

The guide pins may be detachable from the housing in any one direction of the axial direction of the disc, a radial direction of the disc, or a direction from a lower portion of the housing toward an upper portion of the housing.

The guide pins may include a backflow prevention pin configured to prevent a backflow of fluid, generated by the filter assembly or an inner wall of the housing.

The caliper brake may further include: a caliper housing including a piston installing portion in which the piston is installed; and a carrier in which the pair of brake pads move toward or away from the disc, wherein the caliper housing may be coupled to the carrier by a guide rod in such a way as to move forward and backward with respect to the carrier, and the carrier may be fixed to a vehicle.

The housing may include: an inner housing; and an outer housing configured to be detachable from the inner housing.

The inner housing may include: an inner housing opening formed at one side of the inner housing such that the piston installing portion is exposed to outside, wherein a portion of the disc is inserted into a lower side of the inner housing through the inner housing opening; and an inner guide pin coupling portion penetrating the inner housing in the axial direction of the disc, wherein the guide pins may include an inner guide pin configured to be detachable from the inner guide pin coupling portion.

The outer housing may include: an outer housing opening through which a portion of the disc is inserted into a lower side of the outer housing; and an outer guide pin coupling portion penetrating the outer housing in the axial direction of the disc, wherein the guide pins may include an outer guide pin configured to be detachable from the outer guide pin coupling portion.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view showing a disassembled state of a brake dust collector according to an embodiment of the invention;
FIG. 2 is a perspective view showing an assembled state of a brake dust collector according to an embodiment of the invention;
FIG. 3A is a side view showing a flow of brake dust in a brake dust collector according to an embodiment of the invention;
FIG. 3B is a side view showing a flow of brake dust in a brake dust collector according to an embodiment of the invention;
FIG. 4A is a side view showing a flow of brake dust in a brake dust collector according to an embodiment of the invention;
FIG. 4B is a side view showing a flow of brake dust in a brake dust collector according to an embodiment of the invention;
FIG. 5 is a perspective view showing a concave portion of a brake dust collector according to an embodiment of the invention; and
FIG. 6 is a perspective view showing a concave portion of a brake dust collector according to an embodiment of the invention.

### DETAILED DESCRIPTION

Hereinafter, embodiments of the invention will be described in detail with reference to the accompanying drawings. The following embodiments are provided to sufficiently transfer the technical concepts of the invention to one of ordinary skill in the technical art to which the invention belongs. However, the invention is not limited to these embodiments, and may be embodied in another form. In the drawings, parts that are irrelevant to the descriptions may be not shown in order to clarify the invention, and also, for easy understanding, the sizes of components are more or less exaggeratedly shown.

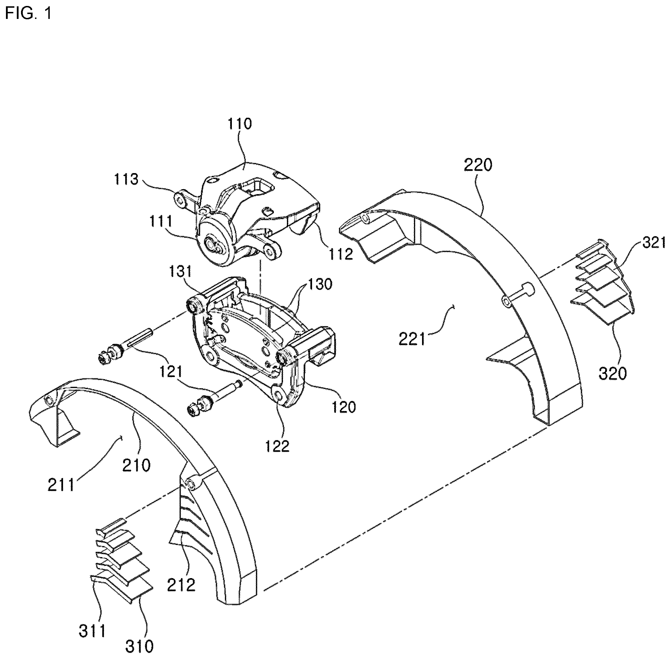

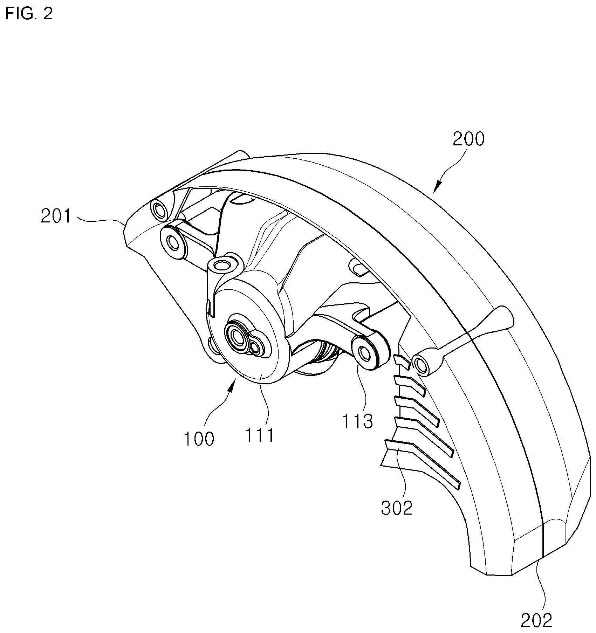

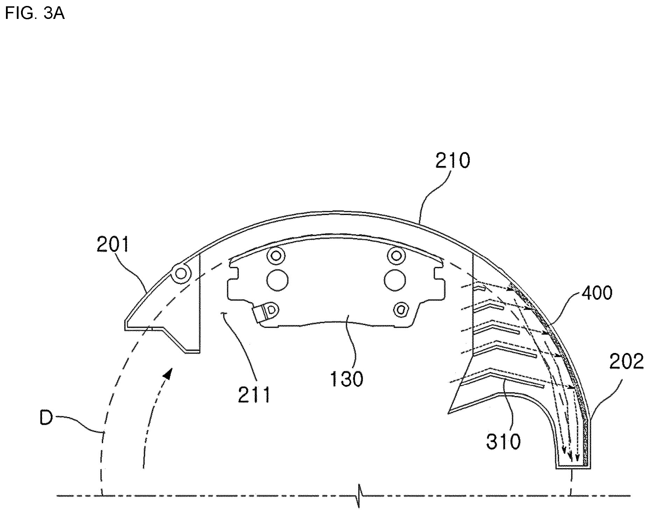

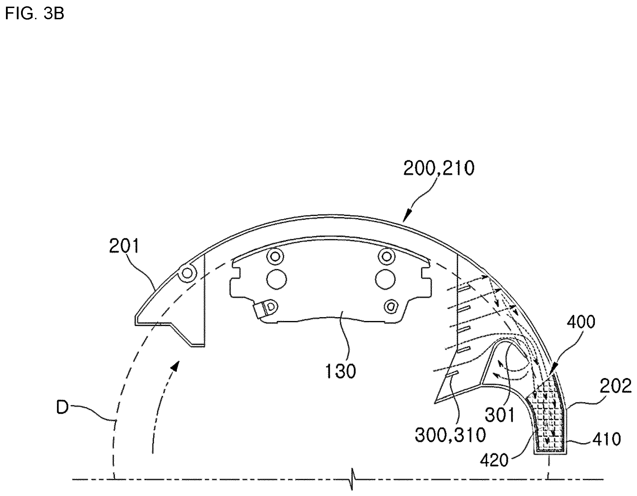

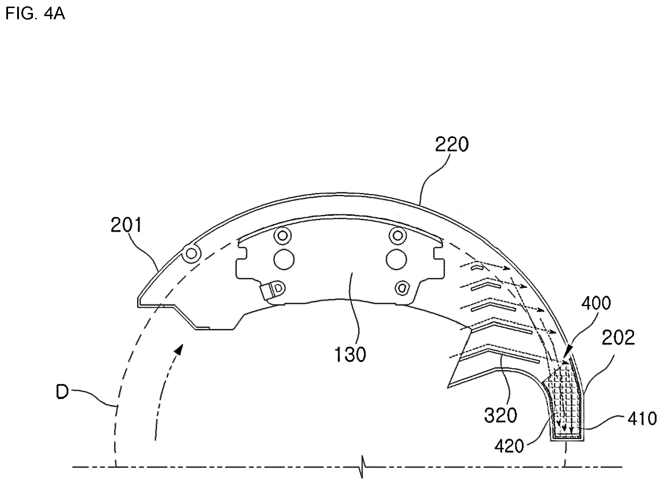

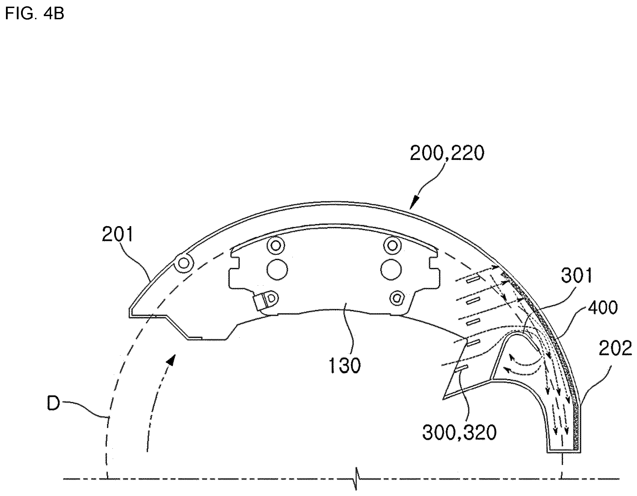

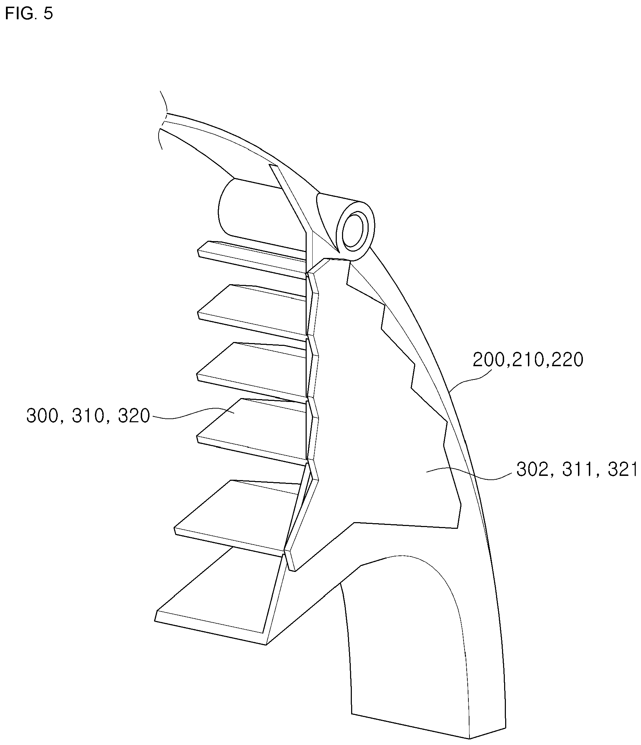

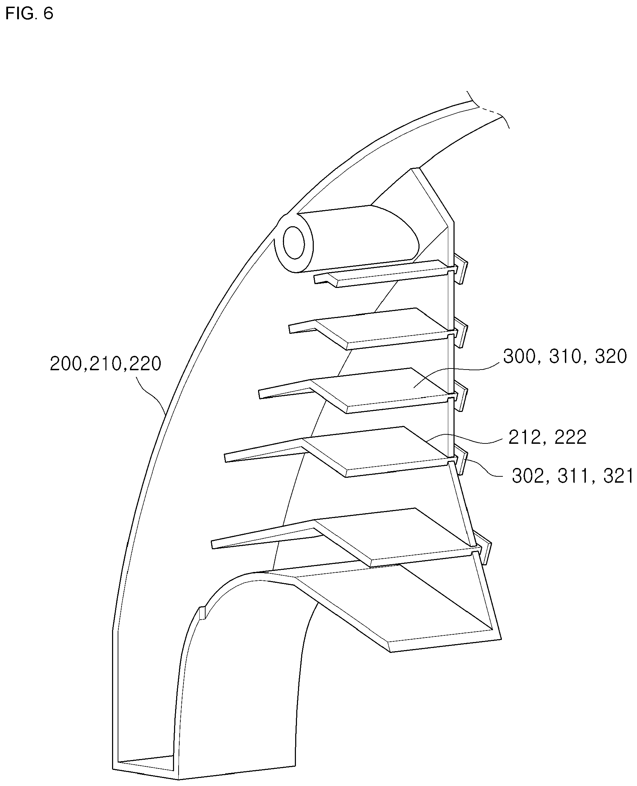

FIGS. 1 and 2 are perspective views respectively showing a disassembled state and assembled state of a brake dust collector according to an embodiment of the invention. Also, FIGS. 3A, 3B, 4A, and 4B are side views respectively showing flows of brake dust in a brake dust collector according to an embodiment of the invention. Also, FIGS. 5 and 6 are perspective views respectively showing a concave portion of a brake dust collector according to an embodiment of the invention.

Referring to FIGS. 1 to 6, an assembly for collecting brake dust includes a caliper brake 100, a housing 200, a guide pin 300, and a filter assembly 400.

The caliper brake 100 includes a caliper housing 110, a carrier 120, and a brake pad 130.

The caliper housing 110 may include a piston installing portion 111 which is provided at one side of the caliper housing 110 and in which a piston moving forward and backward by a rotational force of a motor or pressure of fluid is installed, and a finger portion 112 provided at another side of the caliper housing 110. The caliper housing 110 may open at its lower side to surround a portion of a disc D. Also, the caliper housing 110 may further include a pair of guide rod coupling portions 113 provided at the piston installing portion 111.

A pair of brake pads 130 may be installed at the carrier 120 in such a way as to move toward or away from the disc D rotating together with a wheel. The caliper housing 110 may be coupled to the carrier 120 by guide rods 121 in such a way as to move forward and backward with respect to the carrier 120, and the carrier 120 may be fixed to a knuckle, etc. of a vehicle. The guide rods 121 may be inserted into and fixed to the carrier 120 through the guide rod coupling portions 113. Accordingly, the caliper housing 110 may move forward and backward with respect to the carrier 120 while the piston moves forward and backward. Also, the carrier 120 may further include knuckle coupling portions 122 to be coupled to the knuckle, etc. of the vehicle. In this case, the knuckle coupling portions 122 may also be used as coupling portions to be coupled to the housing 200.

The brake pads 130 are respectively positioned to both sides of the disc D on the carrier 120, as described above, to be tightly pressed against the disc D or spaced from the disc D while the piston moves forward or backward. For this, the brake pads 130 may include pad springs 131 respectively provided at a leading side and a trailing side to move toward the disc D or away from the disc D on the carrier 120. The pad springs 131 may be leaf springs each including a plurality of bent portions, fixed to the carrier 120, and respectively support the brake pads 130 from below at the leading side and the trailing side.

Accordingly, the caliper brake 100 configured as described above may generate a braking force by the brake pads 130 that press or release both sides of the disc D while the piston moves forward or backward. Also, in the brake dust collector according to an embodiment of the invention, the caliper brake 100 may apply or further include various other known structures and configurations, in addition to the above-described configuration and structure.

The housing 200 surrounds at least one portion of the disc D and the caliper brake 100 to install the brake pads 130 therein, and may be coupled to the carrier 120 or the knuckle of the vehicle. In this case, the housing 200 may be coupled to both the carrier 120 and the knuckle of the vehicle. For this, the housing 200 may open at its lower side and have an arc shape surrounding a portion of an outer circumferential surface of the disc D as seen from the side.

Also, the housing 200 may include a leading portion 201 and a trailing portion 202. Also, in the housing 200, the trailing portion 202 may be longer than the leading portion 201 along a circumferential direction of the disc D, or the leading portion 201 may be omitted.

More specifically, the housing 200 may be divided into an inner housing 210 and an outer housing 220. When the brake dust collector according to an embodiment of the invention is installed in the vehicle, the inner housing 210 may be positioned adjacent to a center in width direction of the vehicle, and the outer housing 220 may be positioned outside the inner housing 210 and coupled to the inner housing 210.

The inner housing 210 may include, as shown in FIGS. 3A and 3B, an inner housing opening 211 formed at one side by opening a part of a side portion of the inner housing 210 together with its lower side such that the piston installing portion 111 is exposed to the outside and a portion of the disc D is inserted into the inner housing opening 211, and an inner guide pin coupling portion 212 which penetrates the inner housing 210 in an axial direction of the disc D and to which an inner guide pin 310 which will be described below is coupled. Also, the inner housing 210 may further include a bracket to be coupled to the knuckle of the vehicle or the carrier 120. For example, the bracket of the inner housing 210 may further include a coupling portion capable of being coupled to the knuckle of the vehicle together with the carrier 120 at a location corresponding to the knuckle coupling portions 122.

The outer housing 220 may include, as shown in FIGS. 4A and 4B, an outer housing opening 221 formed by opening a part of a lower side of the outer housing 220 such that a portion of the disc D is inserted into the outer housing opening 221, and an outer guide pin coupling portion 222 which penetrates the outer housing 220 in the axial direction of the disc D and to which an outer guide pin 320 which will be described below is coupled. In this case, after the inner housing 210 is coupled to the outer housing 220, an inside space of the housing 200 may not communicate with an outside space of the housing 200, except for the inner housing opening 211 and the outer housing opening 221.

The guide pin 300 are means provided at an area where dust (hereinafter, referred to as brake dust) generated by friction between the brake pads 130 and the disc D is discharged by a flow of air caused by a rotation of the disc D and driving of the vehicle to guide the brake dust to a preset location. The guide pin 300 are integrated into the housing 200 inside the housing 200. The preset location may be a direction toward the filter assembly 400 provided on an inner circumferential surface of the housing 200 or at one end of the inside space of the housing 200. Also, the guide pin 300 may be detachable from the housing 200.

For example, the guide pin 300 may be coupled to the housing 200 in the axial direction of the disc D, as shown in FIG. 1, or the guide pin 300 may be detachable from the housing 200 in a radial direction of the disc D, in a direction from an upper portion of the housing 200 toward a lower portion of the housing 200, or in a direction from the lower portion of the housing 200 toward the upper portion of the housing 200, although not shown in the drawings.

More specifically, the guide pin 300 protrudes from an inner side surface of the leading portion 201 and/or trailing portion 202 of the housing 200 in the axial direction of the disc D to be adjacent to a side surface of the disc D. In this case, an end of the guide pin 300 toward the disc D may be at the same height from the side surface of the disc D in the axial direction of the disc D.

Also, a plurality of guide pins 300 may be arranged at preset intervals from the upper portion to lower portion of the housing 200. The plurality of guide pins 300 may have the same length and shape or may have longer lengths at the lower portion than at the upper portion, or the plurality of guide pins 300 may include bent portions or curved surfaces to guide fluid to a specific location.

Accordingly, spaces between the guide pins 300 and spaces between the guide pins 300 and an inner wall of the housing 200 form a flow path through which fluid including brake dust is guided to the filter assembly 400. A cross sectional area of the flow path is reduced from a side at which fluid including brake dust enters toward the filter assembly 400 in order to further increase a flow velocity of the fluid including the brake dust around the filter assembly 400.

Meanwhile, the guide pins 300 may include, as shown in FIGS. 3B and 4B, a backflow prevention pin 301 for preventing fluid including brake dust from flowing backward toward the brake pads 130 due to a flow velocity of the fluid and the inner wall of the housing 200 or the filter assembly 410. In this case, one end of the backflow prevention pin 301 may extend upward from the inner circumferential surface of the housing 200 and another end of the backflow prevention pin 301 may be bent toward one end of the housing 200. Also, an end of the backflow prevention pin 301 toward the disc D may be adjacent to the side surface of the disc D in height to further prevent fluid from flowing backward toward the brake pads 130. Accordingly, the brake dust collector according to the current embodiment may further reduce pollutants that are discharged from the vehicle by improving efficiency of collecting brake dust through a brake dust guide structure and a backflow prevention structure.

More specifically, the guide pins 300 may further include a guide pin flange 302 supported on an outer side wall of the housing 200 and fixing the guide pins 300 to the housing 200. Also, each guide pin 300 may include the guide pin flange 302, as shown in FIG. 6, to be detached from the housing 200 in the axial direction of the disc D, or a plurality of guide pins 300 may be provided on one guide pin flange 302 to be detached from the housing 200 in any one direction of the axial direction of the disc D, the radial direction of the disc D, or the direction from the lower portion of the housing 200 toward the upper portion of the housing 200, as shown in FIG. 5.

For example, the guide pins 300 may include an inner guide pin 310 and an outer guide pin 320 respectively coupled to the inner housing 210 and the outer housing 220.

The inner guide pin 310 may include an inner guide pin flange 311 being supportable on an inner guide pin coupling portion 212 provided in the inner housing 210 and be fixed to the inner housing 210 through the inner guide pin coupling portion 212.

The outer guide pin 320 may include an outer guide pin flange 321 being supportable on an outer guide pin coupling portion 222 provided in the outer housing 220 and be fixed to the outer housing 220 through the outer guide pin coupling portion 222. In this case, ends of the inner guide pin 310 and the outer guide pin 320 positioned inside the housing 200 may be respectively adjacent to both sides of the disc D.

Meanwhile, the filter assembly 400 may include, as means for collecting brake dust, a filter 420 including various known materials and shapes, such as a metal having corrosion resistance, metallic nonwoven fabric, ceramic, or a high temperature resistant synthetic resin material, and may be detachable from the housing 200.

More specifically, the filter assembly 400 may be provided on the inner circumferential surface of the housing 200, as shown in FIGS. 3A and 4B, to collect brake dust from fluid including the brake dust, guided through the guide pins 300. Also, the filter assembly 400 may include a case 410 being in a shape of a cup and the filter 420 installed in the case 410, as shown in FIGS. 3B and 4A, and the filter assembly 400 may be provided at an inner end of the housing 200 to collect brake dust from fluid including the brake dust, guided through the guide pins 300.

Also, the filter assembly 400 may be first assembled into the inner housing 210 or the outer housing 220, and when the inner housing 210 is coupled to the outer housing 220, the filter assembly 400 may be firmly fixed in the inside space of the housing 200. Also, the guide pin 300 and the filter assembly 400 may be provided at the leading portion 201, although not shown.

Meanwhile, a flow of brake dust in the brake dust collector according to an embodiment of the invention will be described with reference to FIGS. 3A, 3B, 4A, and 4B, as follows. Brake dust generated by friction between the brake pads 130 and the disc D may enter the inside space of the housing 200 together with fluid such as air by a rotation, etc. of the disc D. At this time, fluid including brake dust may be guided toward the filter assembly 400 by the guide pins 300. Fluid including brake dust, moving backward toward the outside space of the housing 200 by the inner wall of the housing 200, the filter assembly 400, etc., may be guided toward the filter assembly 400 by the backflow prevention pin 301.

Accordingly, the brake dust collector according to the current embodiment may reduce manufacturing cost and maintenance and repair cost by significantly reducing a size of the filter 420 for collecting brake dust.

The brake dust collector according to the current embodiment may reduce pollutants that are discharged from the vehicle by effectively collecting brake dust that is generated by friction between the disc and the brake pads and discharged to the outside of the housing.

The brake dust collector according to the current embodiment may further reduce pollutants that are discharged from the vehicle by improving efficiency of collecting brake dust through a brake dust guide structure and a backflow prevention structure.

The brake dust collector according to the current embodiment may reduce manufacturing cost and maintenance and repair cost by significantly reducing the size of the filter for collecting brake dust.

So far, the detailed embodiments of the brake dust collector according to the invention have been described, however, various modifications can be made without departing from the scope of the invention.

Therefore, the scope of the invention should not be limited to the above-described embodiments and should be defined by the following claims.

## Claims

1. An assembly for collecting brake dust, comprising:
a disc (D) configured to rotate with a wheel;
a caliper brake (100) comprising a pair of brake pads (130) respectively positioned to both sides of the disc (D) and configured to be tightly pressed against the disc (D) to generate a braking for or spaced from the disc (D); and
a brake dust collector comprising:
a housing (200) surrounding at least one portion (112, 113, 122, 201, 212, 222) of the disc (D) and the caliper brake (100), wherein the brake pads (130) are positioned inside the housing (200);
a filter assembly (400) provided inside the housing (200); and
a plurality of guide pins (300) protruding from an inner side wall of the housing (200) in an axial direction of the disc (D) to be adjacent to a side surface of the disc (D) and extending from an area where the brake dust is discharged toward an inner circumferential surface of the housing (200),
wherein the guide pins (300) are provided at a leading portion (201) and/or at a trailing portion (202) of the housing (200),
wherein the plurality of guide pins (300) extend from an area where brake dust generated by friction between the brake pads (130) and the disc (D) is discharged toward the filter assembly (400),
wherein spaces between the guide pins (300) and spaces between the guide pins (300) and an inner wall of the housing (200) form a flow path for guiding fluid including brake dust to the filter assembly (400), and wherein a cross sectional area of the flow path is reduced from a side at which fluid including brake dust enters toward the filter assembly (400) in order to increase a flow velocity of the fluid including the brake dust around the filter assembly (400).

2. The assembly of claim 1, wherein the guide pins (300) include a guide pin flange (302, 311, 321) supported on an outer side wall of the housing (200) and configured to fix the guide pins (300) to the housing (200).

3. The assembly of claim 1 or 2, wherein the guide pins (300) include a backflow prevention pin (301) configured to prevent a backflow of fluid, generated by an inner wall of the housing (200).

4. The assembly of claim 1, wherein the filter assembly (400) is detachable from an inner circumferential surface of the housing (200).

5. The assembly of claim 1, wherein the filter assembly (400) includes:
a case (410) provided at an inner end of the housing (200) and being in a shape of a cup; and
a filter (420) provided in an inside space of the case (410),
wherein the filter assembly (400) is detachable from the housing (200).

6. The assembly of claim 1, wherein the guide pins (300) include a guide pin flange (302, 311, 321) supported on an outer side wall of the housing (200) and configured to fix the guide pins (300) to the housing (200).

7. The assembly of claim 6, wherein a plurality of guide pins (300) is arranged at preset intervals on the guide pin flange (302, 311, 321).

8. The assembly of claim 7, wherein the guide pins (300) are detachable from the housing (200) in any one direction of the axial direction of the disc (D), a radial direction of the disc (D), or a direction from a lower portion (112, 113, 122, 201, 212, 222) of the housing (200) toward an upper portion of the housing (200).

9. The assembly of claim 1, wherein the guide pins (300) include a backflow prevention pin (301) is configured to prevent a backflow of fluid, generated by the filter assembly (400) or an inner wall of the housing.

10. The assembly of claim 1, wherein the caliper brake (100) further includes:
a caliper housing (110) including a piston installing portion (111) in which the piston is installed; and
a carrier (120) in which the pair of brake pads (130) move toward or away from the disc (D), wherein the caliper housing (110) is coupled to the carrier (120) by a guide rod (121) in such a way as to move forward and backward with respect to the carrier (120), the carrier (120) being fixed to a vehicle.

11. The assembly of claim 10, wherein the housing (200) includes:
an inner housing (210); and
an outer housing (220) configured to be detachable from the inner housing (210).

12. The assembly of claim 11, wherein the inner housing (210) includes:
an inner housing opening (211) formed at one side of the inner housing (210) such that the piston installing portion (111) is exposed to outside, wherein a portion (112, 113, 122, 201, 212, 222) of the disc (D) is inserted into a lower side of the inner housing (210) through the inner housing opening (211); and
an inner guide pin (310) coupling portion (112, 113, 122, 201, 212, 222) penetrating the inner housing (210) in the axial direction of the disc (D),
wherein the guide pins (300) include an inner guide pin (310) configured to be detachable from the inner guide pin (310) coupling portion (112, 113, 122, 201, 212, 222).

13. The assembly of claim 11, wherein the outer housing includes:
an outer housing opening (221) through which a portion (112, 113, 122, 201, 212, 222) of the disc (D) is inserted into a lower side of the outer housing (220); and
an outer guide pin (320) coupling portion (112, 113, 122, 201, 212, 222) penetrating the outer housing (220) in the axial direction of the disc (D),
wherein the guide pins (300) include an outer guide pin (320) configured to be detachable from the outer guide pin (320) coupling portion (112, 113, 122, 201, 212, 222).

## Patentansprüche

1. Anordnung zum Auffangen von Bremsstaub, umfassend:
eine Bremsscheibe (D), die dazu eingerichtet ist, sich mit einem Rad zu drehen;
eine Sattelbremse (100), welche ein Paar Bremsbeläge (130) aufweist, die auf jeweils einer der beiden Seiten der Bremsscheibe (D) angeordnet und dazu eingerichtet sind, fest gegen die Bremsscheibe (D) gedrückt zu werden, um eine Bremskraft zu erzeugen, oder von der Bremsscheibe (D) beabstandet zu sein; und
eine Bremsstaubauffangeinrichtung, welche aufweist:
ein Gehäuse (200), das zumindest einen Abschnitt (112, 113, 122, 201, 212, 222) der Bremsscheibe (D) und der Sattelbremse (100) umgibt, wobei die Bremsbeläge (130) innerhalb des Gehäuses (200) angeordnet sind;
eine innerhalb des Gehäuses (200) vorgesehene Filteranordnung (400); und
eine Vielzahl von Führungsstiften (300), die von einer inneren Seitenwand des Gehäuses (200) in einer Axialrichtung der Bremsscheibe (D) derart vorstehen, dass sie an eine Seitenfläche der Bremsscheibe (D) angrenzen, und die sich von einem Bereich, in dem der Bremsstaub ausgetragen wird, in Richtung einer Innenumfangsfläche des Gehäuses (200) erstrecken,
wobei die Führungsstifte (300) an einem vorlaufenden Abschnitt (201) und/oder an einem nachlaufenden Abschnitt (202) des Gehäuses (200) vorgesehen sind,
wobei sich die Vielzahl von Führungsstiften (300) von einem Bereich, in dem durch Reibung zwischen den Bremsbelägen (130) und der Bremsscheibe (D) erzeugter Bremsstaub ausgetragen wird, in Richtung der Filteranordnung (400) erstrecken,
wobei Räume zwischen den Führungsstiften (300) und Räume zwischen den Führungsstiften (300) und einer Innenwand des Gehäuses (200) einen Strömungsweg zum Leiten eines Bremsstaub enthaltenden Fluids zu der Filteranordnung (400) bilden, und
wobei eine Querschnittsfläche des Strömungswegs von einer Seite, an der das Bremsstaub enthaltende Fluid eintritt, in Richtung der Filteranordnung (400) verringert ist, um eine Strömungsgeschwindigkeit des Bremsstaub enthaltenden Fluids um die Filteranordnung (400) herum zu erhöhen.

2. Anordnung nach Anspruch 1, wobei die Führungsstifte (300) einen Führungsstiftflansch (302, 311, 321) aufweisen, der an einer äußeren Seitenwand des Gehäuses (200) abgestützt und dazu eingerichtet ist, die Führungsstifte (300) an dem Gehäuse (200) zu befestigen.

3. Anordnung nach Anspruch 1 oder 2, wobei die Führungsstifte (300) einen Rückströmungsverhinderungsstift (301) aufweisen, der dazu eingerichtet ist, eine durch eine Innenwand des Gehäuses (200) erzeugte Rückströmung des Fluids zu verhindern.

4. Anordnung nach Anspruch 1, wobei die Filteranordnung (400) von einer Innenumfangsfläche des Gehäuses (200) lösbar ist.

5. Anordnung nach Anspruch 1, wobei die Filteranordnung (400) umfasst:
ein Aufnahmegehäuse (410), das an einem inneren Ende des Gehäuses (200) vorgesehen und becherförmig ist; und
einen Filter (420), der in einem Innenraum des Aufnahmegehäuses (410) vorgesehen ist,
wobei die Filteranordnung (400) von dem Gehäuse (200) lösbar ist.

6. Anordnung nach Anspruch 1, wobei die Führungsstifte (300) einen Führungsstiftflansch (302, 311, 321) aufweisen, der an einer äußeren Seitenwand des Gehäuses (200) abgestützt und dazu eingerichtet ist, die Führungsstifte (300) an dem Gehäuse (200) zu befestigen.

7. Anordnung nach Anspruch 6, wobei eine Vielzahl von Führungsstiften (300) in vorgegebenen Abständen an dem Führungsstiftflansch (302, 311, 321) angeordnet sind.

8. Anordnung nach Anspruch 7, wobei die Führungsstifte (300) in der Axialrichtung der Bremsscheibe (D), in einer Radialrichtung der Bremsscheibe (D) oder in einer Richtung von einem unteren Abschnitt (112, 113, 122, 201, 212, 222) des Gehäuses (200) zu einem oberen Abschnitt des Gehäuses (200) von dem Gehäuse (200) lösbar sind.

9. Anordnung nach Anspruch 1, wobei die Führungsstifte (300) einen Rückströmungsverhinderungsstift (301) aufweisen, der dazu eingerichtet ist, eine durch die Filteranordnung (400) oder eine Innenwand des Gehäuses erzeugte Rückströmung des Fluids zu verhindern.

10. Anordnung nach Anspruch 1, wobei die Sattelbremse (100) ferner umfasst:
ein Sattelgehäuse (110), das einen Kolbenaufnahmeabschnitt (111) umfasst, in dem der Kolben eingebaut ist; und
einen Träger (120), in dem sich das Paar Bremsbeläge (130) zu der Bremsscheibe (D) hin oder von der Bremsscheibe (D) weg bewegt, wobei das Sattelgehäuse (110) mittels einer Führungsstange (121) derart mit dem Träger (120) gekoppelt ist, dass es sich in Bezug auf den Träger (120) vorwärts und rückwärts bewegen kann, wobei der Träger (120) an einem Fahrzeug befestigt ist.

11. Anordnung nach Anspruch 10, wobei das Gehäuse (200) umfasst:
ein Innengehäuse (210); und
ein Außengehäuse (220), das dazu eingerichtet ist, von dem Innengehäuse (210) lösbar zu sein.

12. Anordnung nach Anspruch 11, wobei das Innengehäuse (210) umfasst:
eine Innengehäuseöffnung (211), die an einer Seite des Innengehäuses (210) derart ausgebildet ist, dass der Kolbenaufnahmeabschnitt (111) nach außen freiliegt, wobei ein Abschnitt (112, 113, 122, 201, 212, 222) der Bremsscheibe (D) durch die Innengehäuseöffnung (211) in einen unteren Bereich des Innengehäuses (210) eingesetzt ist; und
einen Kopplungsabschnitt (112, 113, 122, 201, 212, 222) für einen inneren Führungsstift (310), der das Innengehäuse (210) in der Axialrichtung der Bremsscheibe (D) durchdringt,
wobei die Führungsstifte (300) einen inneren Führungsstift (310) aufweisen, der dazu eingerichtet ist, von dem Kopplungsabschnitt (112, 113, 122, 201, 212, 222) für den inneren Führungsstift (310) lösbar zu sein.

13. Anordnung nach Anspruch 11, wobei das Außengehäuse umfasst:
eine Außengehäuseöffnung (221), durch die ein Abschnitt (112, 113, 122, 201, 212, 222) der Bremsscheibe (D) in einen unteren Bereich des Außengehäuses (220) eingesetzt ist; und
einen Kopplungsabschnitt (112, 113, 122, 201, 212, 222) für einen äußeren Führungsstift (320), der das Außengehäuse (220) in der Axialrichtung der Bremsscheibe (D) durchdringt,
wobei die Führungsstifte (300) einen äußeren Führungsstift (320) aufweisen, der dazu eingerichtet ist, von dem Kopplungsabschnitt (112, 113, 122, 201, 212, 222) für den äußeren Führungsstift (320) lösbar zu sein.

## Revendications

1. Ensemble destiné à collecter de la poussière de frein, comprenant :
un disque (D) configuré pour tourner avec une roue ;
un frein à étrier (100) comprenant une paire de plaquettes de frein (130) positionnées respectivement de part et d'autre du disque (D) et configurées pour être fermement pressées contre le disque (D) afin de générer une force de freinage, ou pour être écartées du disque (D) ; et
un collecteur de poussière de frein comprenant :
un boîtier (200) entourant au moins une partie (112, 113, 122, 201, 212, 222) du disque (D) et du frein à étrier (100), les plaquettes de frein (130) étant positionnées à l'intérieur du boîtier (200) ;
un ensemble filtrant (400) disposé à l'intérieur du boîtier (200) ; et
une pluralité de broches de guidage (300) faisant saillie depuis une paroi latérale intérieure du boîtier (200), dans une direction axiale du disque (D), de manière à être adjacentes à une surface latérale du disque (D), et s'étendant depuis une zone dans laquelle la poussière de frein est évacuée vers une surface circonférentielle intérieure du boîtier (200),
dans lequel les broches de guidage (300) sont disposées au niveau d'une partie avant (201) et/ou d'une partie arrière (202) du boîtier (200),
dans lequel la pluralité de broches de guidage (300) s'étend depuis une zone dans laquelle la poussière de frein générée par le frottement entre les plaquettes de frein (130) et le disque (D) est évacuée vers l'ensemble filtrant (400),
dans lequel les espaces entre les broches de guidage (300), ainsi que les espaces entre les broches de guidage (300) et une paroi intérieure du boîtier (200), forment un passage d'écoulement destiné à guider un fluide contenant de la poussière de frein vers l'ensemble filtrant (400), et
dans lequel une aire de section transversale du passage d'écoulement est réduite depuis un côté par lequel le fluide contenant de la poussière de frein pénètre vers l'ensemble filtrant (400), afin d'augmenter une vitesse d'écoulement du fluide contenant la poussière de frein autour de l'ensemble filtrant (400).

2. Ensemble selon la revendication 1, dans lequel les broches de guidage (300) comprennent une bride de broche de guidage (302, 311, 321), supportée sur une paroi latérale extérieure du boîtier (200) et configurée pour fixer les broches de guidage (300) au boîtier (200).

3. Ensemble selon la revendication 1 ou 2, dans lequel les broches de guidage (300) comprennent une broche de prévention du reflux (301), configurée pour empêcher un reflux de fluide généré par une paroi intérieure du boîtier (200).

4. Ensemble selon la revendication 1, dans lequel l'ensemble filtrant (400) est détachable d'une surface circonférentielle intérieure du boîtier (200).

5. Ensemble selon la revendication 1, dans lequel l'ensemble filtrant (400) comprend :
un réceptacle (410) disposé à une extrémité intérieure du boîtier (200) et présentant une forme de coupelle ; et
un filtre (420) disposé dans un espace intérieur du réceptacle (410),
dans lequel l'ensemble filtrant (400) est détachable du boîtier (200).

6. Ensemble selon la revendication 1, dans lequel les broches de guidage (300) comprennent une bride de broche de guidage (302, 311, 321), supportée sur une paroi latérale extérieure du boîtier (200) et configurée pour fixer les broches de guidage (300) au boîtier (200).

7. Ensemble selon la revendication 6, dans lequel une pluralité de broches de guidage (300) est disposée à des intervalles prédéfinis sur la bride de broche de guidage (302, 311, 321).

8. Ensemble selon la revendication 7, dans lequel les broches de guidage (300) sont détachables du boîtier (200) selon l'une quelconque des directions suivantes : la direction axiale du disque (D), une direction radiale du disque (D), ou une direction allant d'une partie inférieure (112, 113, 122, 201, 212, 222) du boîtier (200) vers une partie supérieure du boîtier (200).

9. Ensemble selon la revendication 1, dans lequel les broches de guidage (300) comprennent une broche de prévention du reflux (301), configurée pour empêcher un reflux de fluide généré par l'ensemble filtrant (400) ou par une paroi intérieure du boîtier.

10. Ensemble selon la revendication 1, dans lequel le frein à étrier (100) comprend en outre :
un corps d'étrier (110) comprenant une partie de montage de piston (111) dans laquelle le piston est installé ; et
un support d'étrier (120) dans lequel la paire de plaquettes de frein (130) se déplace vers le disque (D) ou s'en éloigne, dans lequel le corps d'étrier (110) est couplé au support d'étrier (120) au moyen d'une tige de guidage (121), de manière à pouvoir se déplacer vers l'avant et vers l'arrière par rapport au support d'étrier (120), le support d'étrier (120) étant fixé à un véhicule.

11. Ensemble selon la revendication 10, dans lequel le boîtier (200) comprend :
un boîtier intérieur (210) ; et
un boîtier extérieur (220) configuré pour être détachable du boîtier intérieur (210).

12. Ensemble selon la revendication 11, dans lequel le boîtier intérieur (210) comprend :
une ouverture de boîtier intérieur (211), formée sur un côté du boîtier intérieur (210) de telle sorte que la partie de montage de piston (111) soit exposée vers l'extérieur, une partie (112, 113, 122, 201, 212, 222) du disque (D) étant insérée dans un côté inférieur du boîtier intérieur (210) à travers l'ouverture de boîtier intérieur (211) ; et
une partie de couplage (112, 113, 122, 201, 212, 222) pour une broche de guidage intérieure (310), traversant le boîtier intérieur (210) dans la direction axiale du disque (D),
dans lequel les broches de guidage (300) comprennent une broche de guidage intérieure (310), configurée pour être détachable de la partie de couplage (112, 113, 122, 201, 212, 222) pour la broche de guidage intérieure (310).

13. Ensemble selon la revendication 11, dans lequel le boîtier extérieur comprend :
une ouverture de boîtier extérieur (221), à travers laquelle une partie (112, 113, 122, 201, 212, 222) du disque (D) est insérée dans un côté inférieur du boîtier extérieur (220) ; et
une partie de couplage (112, 113, 122, 201, 212, 222) pour une broche de guidage extérieure (320), traversant le boîtier extérieur (220) dans la direction axiale du disque (D),
dans lequel les broches de guidage (300) comprennent une broche de guidage extérieure (320), configurée pour être détachable de la partie de couplage (112, 113, 122, 201, 212, 222) pour la broche de guidage extérieure (320).
